# EUROPEAN PATENT SPECIFICATION

(11) **EP 4 464 646 B1**
(45) Date of publication and mention of the grant of the patent: **01.10.2025**
(21) Application number: 24150608.8
(22) Date of filing: 08.01.2024
(51) Int. Cl.: B66F 9/14, B66F 9/06, B66F 9/18

(54) **TRANSPORT ROBOT**
TRANSPORTROBOTER
ROBOT DE TRANSPORT

(30) Priority: 15.05.2023 KR 20230062667
(43) Date of publication of application: 20.11.2024
(73) Proprietor: Bear Robotics Korea, Inc., Seoul (KR)
(72) Inventor: YEOM, Hoyeon, 06772 Seoul (KR); CHA, Bawoo, 06772 Seoul (KR); JANG, Changyong, 06772 Seoul (KR)
(74) Representative: Frenkel, Matthias Alexander

(56) References cited:
- EP-A1- 3 770 106
- EP-A1- 3 904 238
- WO-A1-2019/117844
- WO-A1-2023/028386

## Description

### CROSS-REFERENCE TO RELATED APPLICATION

This application claims the benefit of Korean Patent Application No.10-2023-0062667, filed on May 15, 2023.

### BACKGROUND

### Field

The present disclosure relates to a robot that transports one or more items to a destination and an operating method thereof.

### Discussion of the Related Art

To take charge of a portion of factory automation, robots have been developed for industrial use. Recently, fields of application of the robot have been expanding, and not only a medical robot and an aerospace robot, but also a robot that may be used in daily life are being developed.

Among industrial robots, a robot that performs a precise assembly work repeatedly performs the same operation and repeats the same operation at a specified location without an unexpected situation, so that automation using the robot took precedence.

However, the robot has not yet been actively commercialized in a transportation field, including movement, which is a field where determination on the unexpected situation may be made. However, recently, as a performance of a sensor that recognizes surroundings has improved and computer power that may quickly process and respond to recognized information has improved, the number of mobile robots is increasing.

In the industry, a robot that performs a transportation function is attracting attention, and competition is intensifying day by day. In addition to a robot that transports bulk or large items, there is a need for a robot that may perform a service of transporting small items to a destination. Document EP3904238A1 discloses a transport robot according to the preamble of claim 1.

However, the conventional transport robot has difficulty in automatic unloading, so that additional manpower is required for the unloading even when the transport is automated. In particular, it is difficult to unload heavy items.

### SUMMARY

The present disclosure is to provide a transport robot with a structure in which a loading box is retractable and extendable such that a loaded item is automatically unloaded.

Provided is a transport robot including a body, a mover that is located beneath the body and provides a moving function, a loading box retractable into and extendable from the body, a horizontal driver that moves the loading box in a front and rear direction, a vertical driver that moves the loading box in a vertical direction, and a link module that spreads the loading box in a left and right direction to open a bottom of the loading box, wherein the loading box includes a pair of loading frames that move in the left and right direction opposite to each other as the link module operates.

Each of the pair of loading frames may include a bottom surface where an item is loaded, a front surface where the link module is coupled, and a reinforcing frame connecting the bottom surface with the front surface.

The body may include side frames located on left and right sides of the loading box, and each support frame including a side fixing portion fixed to each side frame and a loading box support protruding from each of left and right ends of a rear surface of the body, and the front surface may include a wing coming into contact with the loading box support of the support frame in response to that the loading box moves rearwards.

The side fixing portion of the support frame may be located upwardly of a lower end of the loading box support, and an upper end of the wing may be located downwardly of the side fixing portion and upwardly of the lower end of the loading box support in response to that the loading box moves downwards by the vertical driver.

The transport robot may further include a side holder that is located between the pair of loading frames and fixes a horizontal movement such that the items in the loading box does not move with the loading frame when the loading box is opened, and the side holder may include a pair of side walls located at left and right sides of the loading box, and a bridge bracket connecting the pair of side walls to each other.

Each side wall may include a hook located at an upper front portion thereof and hooked to an upper portion of the front surface of each loading frame, and a holder roller located at a lower portion thereof and in contact with the bottom surface of each loading frame.

The transport robot may further include a guide bar protruding from an outer surface of each side wall and extending in a horizontal direction, and a guide groove recessed from an end of the loading box support and receiving the guide bar.

The transport robot may further include a horizontal bearing fixed to the outer surface of each side wall and formed on the loading box support in response to that the loading box moves rearwards.

The transport robot may further include a vertical bearing fixed to a front surface of the loading box support and in contact with each side wall.

The link module may include a pair of link modules respectively coupled to the pair of loading frames, each link module may include a link including a first end pivotably coupled to the loading frame and a second end pivotably coupled to a vertical movement bracket of the vertical driver, and a caster coming into contact with the link in response to that the vertical movement bracket moves downwards, and the link may move the loading frame in a horizontal direction while an angle thereof with respect to the floor becomes gentle when coming into contact with the caster.

The link may include a pair of links spaced apart from each other, and a spacing between the respective first ends of the pair of links and a spacing between the respective second ends of the pair of links may be equal to each other.

The link may include a pair of links spaced apart from each other, and a spacing between the respective first ends of the pair of links may be greater than a spacing between the respective second ends of the pair of links.

The vertical driver may include a vertical ball screw extending in the vertical direction, a vertical movement bracket moving along the vertical ball screw and coupled with the second end of the link, and a vertical linear guide disposed in parallel with the vertical ball screw and coupled with the vertical movement bracket.

The horizontal driver may include a horizontal ball screw extending in a horizontal direction, and a horizontal movement bracket where the vertical driver is fixed and moving along the horizontal ball screw.

The horizontal driver may include a first horizontal linear guide that is disposed in parallel with the horizontal ball screw and guides the horizontal movement of the horizontal movement bracket.

The horizontal driver may include a second horizontal linear guide disposed in parallel with the horizontal ball screw and coupled to an upper end of the vertical driver to guide a horizontal movement of the vertical driver.

The loading frame may include a ball roller or a caster located on a bottom surface thereof and in contact with the floor in response to that the loading frame moves in the left and right direction.

The transport robot in the present disclosure may easily unload the item from the loading space as the loading box is automatically extended.

Additionally, the transport robot in the present disclosure may automatically place the item on the floor, minimizing the input of the additional manpower for the unloading.

In addition, the transport robot in the present disclosure may shorten the unloading time via the automated and non-face-to-face unloading system and reduce the delivery delay time resulted from the waiting for the item receipt.

It is to be understood that both the foregoing general description and the following detailed description of the present disclosure are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 shows a 5G network-based cloud system according to an embodiment of the present disclosure;
FIG. 2 is a block diagram for illustrating a configuration of a transport robot according to an embodiment of the present disclosure;
FIG. 3 is a rear perspective view showing a first state of a transport robot according to an embodiment of the present disclosure;
FIG. 4 is a diagram showing a second state in which a loading box of a transport robot is extended in a rearward direction according to an embodiment of the present disclosure;
FIG. 5 is a diagram showing a third state in which a loading box of a transport robot primarily descends according to an embodiment of the present disclosure;
FIG. 6 is a diagram showing a state in which a loading box of a transport robot secondarily descends according to an embodiment of the present disclosure;
FIGS. 7 and 8 are diagrams showing an unloading module of a transport robot according to an embodiment of the present disclosure;
FIG. 9 is a side view showing a movement of an unloading module when switching from a state in FIG. 2 to a state in FIG. 3;
FIGS. 10 and 11 are views showing a loading box, a side holder, and a support frame in a state in which a loading box is extended, as shown in FIG. 4;
FIG. 12 is a front view showing a primary downward movement of an unloading module of a transport robot according to an embodiment of the present disclosure;
FIG. 13 is a diagram showing a loading box and a support frame in a third state of an unloading module of a transport robot according to an embodiment of the present disclosure;
FIG. 14 is a diagram showing a secondary downward movement of an unloading module of a transport robot according to an embodiment of the present disclosure;
FIG. 15 is a graph showing a trajectory of a link module of a transport robot according to an embodiment of the present disclosure;
FIG. 16 is a diagram showing a bottom surface of a loading box of a transport robot according to an embodiment of the present disclosure; and
FIG. 17. is a diagram illustrating another embodiment of a link module of a transport robot according to an embodiment of the present disclosure.

### DESCRIPTION OF SPECIFIC EMBODIMENTS

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions, or steps, disclosed in the specification, and it is also understood that greater or fewer components, functions, or steps may likewise be utilized.

A robot is a machine device capable of automatically performing a certain task or operation. The robot may be controlled by an external control device or may be embedded in the control device. The robot can perform tasks that are difficult for humans to perform, such as repeatedly processing only a preset operation, lifting a heavy object, performing precise tasks or a hard task in extreme environments.

In order to perform such tasks, the robot includes a driver such as an actuator or a motor, so that the robot can perform various physical operations, such as moving a robot joint.

Industrial robots or medical robots having a specialized appearance for specific tasks due to problems such as high manufacturing costs and dexterity of robot manipulation were the first to be developed. Whereas industrial and medical robots are configured to repeatedly perform the same operation in a designated place, mobile robots have recently been developed and introduced to the market. Robots for use in the aerospace industry can perform exploration tasks or the like on distant planets that are difficult for humans to directly go to, and such robots have a driving function.

In order to perform the driving function, the robot has a driver, wheel(s), a frame, a brake, a caster, a motor, etc. In order for the robot to recognize the presence or absence of surrounding obstacles and move while avoiding the surrounding obstacles, an evolved robot equipped with artificial intelligence has recently been developed.

Artificial intelligence refers to a technical field for researching artificial intelligence or a methodology for implementing the artificial intelligence. Machine learning refers to a technical field for defining various problems handled in the artificial intelligence field and for researching methodologies required for addressing such problems. Machine learning is also defined as an algorithm that improves performance of a certain task through continuous experience.

An artificial neural network (ANN) is a model used in machine learning, and may refer to an overall model having problem solving ability, which is composed of artificial neurons (nodes) that form a network by a combination of synapses. The artificial neural network (ANN) may be defined by a connection pattern between neurons of different layers, a learning process of updating model parameters, and an activation function of generating an output value.

The artificial neural network (ANN) may include an input layer and an output layer, and may optionally include one or more hidden layers. Each layer includes one or more neurons, and the artificial neural network (ANN) may include a synapse that interconnects neurons and other neurons.

In the artificial neural network (ANN), each neuron may output a function value of an activation function with respect to input signals received through synapses, weights, and deflection.

A model parameter may refer to a parameter determined through learning, and may include the weight for synapse connection and the deflection of neurons. In addition, the hyperparameter refers to a parameter that should be set before learning in a machine learning algorithm, and includes a learning rate, the number of repetitions, a mini-batch size, an initialization function, and the like.

The purpose of training the artificial neural network (ANN) can be seen as determining model parameters that minimize a loss function according to the purpose of the robot or the field of use of the robot. The loss function can be used as an index for determining an optimal model parameter in a learning process of the artificial neural network (ANN).

Machine learning can be classified into supervised learning, unsupervised learning, and reinforcement learning according to learning methods.

Supervised learning refers to a method for training the artificial neural network (ANN) in a state where a label for learned data is given. Here, the label may refer to a correct answer (or a resultant value) that should be inferred by the artificial neural network (ANN) when the learned data is input to the artificial neural network (ANN). Unsupervised learning may refer to a method for training the artificial neural network (ANN) in a state where a label for learned data is not given. Reinforcement learning may refer to a learning method in which an agent defined in the certain environment learns to select an action or sequence of actions that can maximize cumulative compensation in each state.

Among artificial neural networks, machine learning implemented as a deep neural network (DNN) including a plurality of hidden layers is also referred to as deep learning, and deep learning is a part of machine learning. Hereinafter, machine learning is used in a sense including deep learning.

Artificial intelligence (AI) technology is applied to the robot, so that the robot can be implemented as a guide robot, a transportation robot, a cleaning robot, a wearable robot, an entertainment robot, a pet robot, and an unmanned aerial robot, etc.

The robot may include a robot control module for controlling operation thereof, and the robot control module may refer to a software module or a chip implemented in hardware.

By means of sensor information obtained from various types of sensors, the robot may acquire state information of the robot, may detect (recognize) the surrounding environment and the object, may generate map data, may determine a travel route and a travel plan, may determine a response to user interaction, or may determine a necessary operation.

The robot may perform the above-described operations using a learning model composed of at least one artificial neural network (ANN). For example, the robot may recognize the surrounding environment and object using a learning model, and may determine a necessary operation using the recognized surrounding environment information or object information. Here, the learning model may be directly learned from the robot or learned from an external device such as an AI server.

In this case, whereas the robot can perform a necessary operation by directly generating a result using the learning model, the robot may also perform an operation by transmitting sensor information to an external device such as an AI server and receiving the resultant information generated thereby.

The robot can perform autonomous driving through artificial intelligence. Autonomous driving refers to a technique in which a movable object such as a robot can autonomously determine an optimal path by itself and can move while avoiding collision with an obstacle. The autonomous driving technique currently being applied may include a technique in which the movable object (e.g., a robot) can travel while maintaining a current driving lane, a technique in which the movable object can travel while automatically adjusting a driving speed such as adaptive cruise control, a technique in which the movable object can automatically travel along a predetermined route, and a driving technique in which, after a destination is decided, a route to the destination is automatically set.

In order to perform autonomous driving, the movable object such as the robot may include a large number of sensors to recognize data of the surrounding situation. For example, the sensors may include a proximity sensor, an illumination sensor, an acceleration sensor, a magnetic sensor, a gyro sensor, an inertial sensor, an RGB sensor, an infrared (IR) sensor, a fingerprint recognition sensor, an ultrasonic sensor, an optical sensor, a microphone, a lidar, a radar, and the like.

The robot can perform autonomous driving not only based on information collected by sensors, but also based on image information collected by an RGBC camera and an infrared (IR) camera and sound information collected through a microphone. In addition, the robot can travel based on information received through a user input unit. Map data, location information, and information about peripheral situations can be collected through a wireless communication unit. The collected information is requisite for autonomous driving.

Map data may include object identification information for various objects disposed in a space where the robot moves. For example, the map data may include object identification information for fixed objects such as a wall and a door, and other object identification information for movable objects such as a flowerpot and a desk. In addition, the object identification information may include a name, a type, a distance, a location, etc.

Therefore, the robot may essentially include sensors, various input units, a wireless communication unit, and the like to collect data that can be learned by artificial intelligence, and can perform optimal operations by synthesizing various types of information. The learning processor for performing artificial intelligence can perform learning by being mounted in a controller embedded in the robot, can transmit the collected information to a server, can perform learning through the server, and can retransmit the learned result to the robot, so that the robot can perform autonomous driving based on the learned result.

A robot equipped with artificial intelligence can collect the surrounding information even in a new place to implement the entire map, and a large amount of information about a place of the major activity zone can be accumulated, so that the robot can perform more accurate autonomous driving.

The robot may include a touchscreen or a button to receive a user input, and may receive a command by recognizing a user's voice. In order to convert a voice input signal into a character string, the processor may obtain information about the intention corresponding to the user input using at least one of a speech to text (STT) engine for converting a voice input into a character string and a natural language processing (NLP) engine for obtaining information about the intention of natural language.

In this case, at least one of the STT engine and the NLP engine may include an artificial neural network (ANN) trained by a machine learning algorithm. In addition, at least one of the STT engine and the NLP engine may be trained by the learning processor, may be trained by the learning processor of the AI server, or may be trained by distributed processing of the trained results.

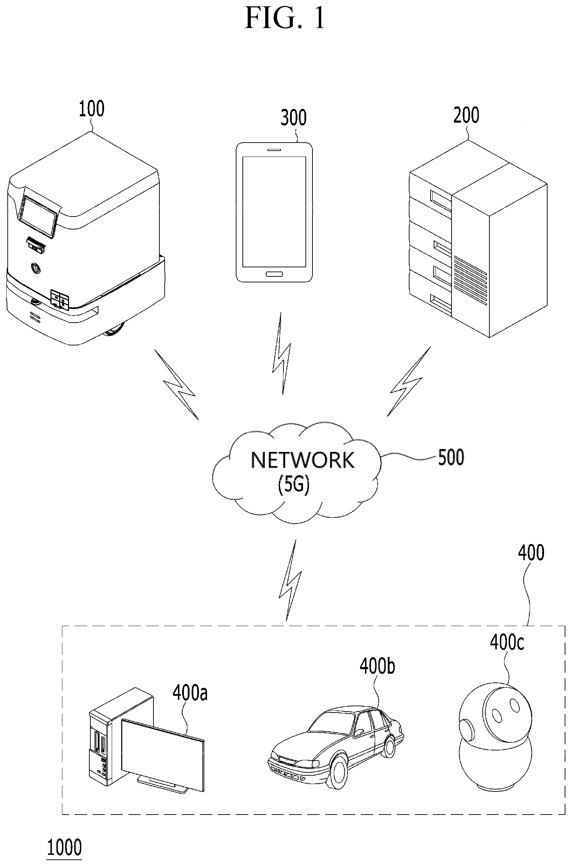

FIG. 1 shows a 5G network-based cloud system 1000 according to an embodiment of the present disclosure.

Referring to FIG. 1, a cloud system 1000 may include a transport robot 100, a mobile terminal 300, a robot control system 200, various devices 400, and a 5G network 500.

The transport robot 100 is a robot that transports an item from a departure point to a destination. The transport robot 100 may move directly from a logistics center to the destination, or may be loaded into a vehicle and moved from the logistics center to a vicinity of the item destination and then be unloaded near the destination and move to the destination.

In addition, the transport robot 100 may move the item to the destination not only outdoors but also indoors. The transport robot 100 may be implemented as an automated guided vehicle (AGV), and the AGV may be a transport device that moves by a sensor on the floor, a magnetic field, a vision system, and the like.

The transport robot 100 may include a storage area for storing the item, the storage area may be divided to load various items, and various types of items may be disposed in the plurality of divided partial storage areas. Accordingly, mixing of the items may be prevented.

The mobile terminal 300 may be in communication with the transport robot 100 via the 5G network 500. The mobile terminal 300 may be a device owned by a user who installs a partition in the storage area to load the item or a device owned by a recipient of the loaded item. The mobile terminal 300 may provide information based on an image, and the mobile terminal 300 may include mobile devices such as a mobile phone, a smart phone, a wearable device (e.g., a smartwatch), a glass-type terminal (a smart glass), and a head mounted display (HMD).

The robot control system 200 may remotely control the transport robot 100 and respond to various requests from the transport robot 100. For example, the robot control system 200 may perform calculation using artificial intelligence in response to the request from the transport robot 100.

Additionally, the robot control system 200 may set a movement path of the transport robot 100. When there are a plurality of destinations, the robot control system 200 may set a movement order for the destinations.

The various devices 400 may include a personal computer (PC) 400a, an autonomous vehicle 400b, a home robot 400c, and the like. When the transport robot 100 arrives at the transport destination of the item, the item may be directly delivered to the home robot 400c via communication with the home robot 400c.

The various devices 400 may be connected in a wired or wireless manner with the transport robot 100, the mobile terminal 300, the robot control system 200, and the like via the 5G network 500.

The transport robot 100, the mobile terminal 300, the robot control system 200, and the various devices 400 are all equipped with a 5G module and thus are able to transmit and receive data at a speed in a range of 100Mbps to 20Gbps (or higher), so that large video files may be transmitted to the various devices and power consumption may be minimized with low power driving. However, the transmission speed may vary depending on the embodiment.

The 5G network 500 may include a 5G mobile communication network, a local area network, Internet, and the like, and may provide a communication environment of the devices in the wired and wireless manner.

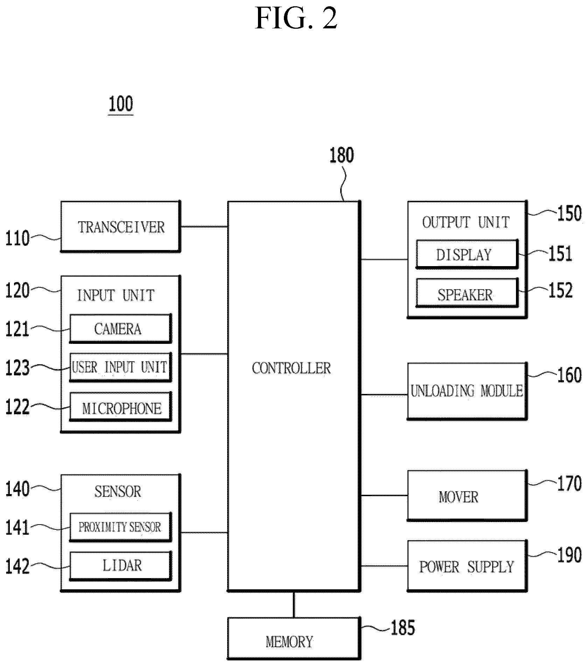

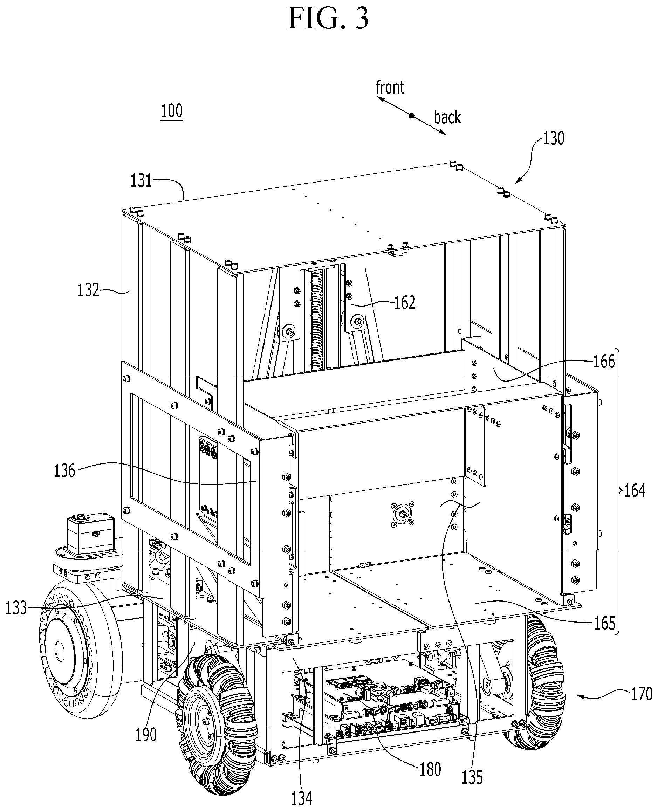

FIG. 2 is a block diagram for illustrating a configuration of the transport robot 100 according to an embodiment of the present disclosure. The description will be made with reference to FIGS. 3 to 5 that illustrate the transport robot 100 according to one embodiment of the present disclosure.

Referring to FIG. 3, the transport robot 100 may include a body including a loading space 135, and components to be described later may be included in the body. The transport robot 100 may include a transceiver 110, an input unit 120, a sensor 140, an output unit 150, a memory 185, a wheel driver 170, a controller 180, and a power supply 190.

The components shown in FIG. 2 are not essential for implementing the transport robot 100, so that the number of components of the transport robot 100 described herein may be greater or smaller than the number of components listed above.

The transceiver 110 may include a wired or wireless communication module that may be in communication with the robot control system 200.

In an optional embodiment, the transceiver 110 may have modules related to global system for mobile communication (GSM), code division multi access (CDMA), long term evolution (LTE), 5G, wireless LAN (WLAN), wireless-fidelity (Wi-Fi), Bluetooth, radio frequency identification (RFID), infrared data association (IrDA), ZigBee, and near field communication (NFC) communication.

The input unit 120 may include a user input unit 122 for receiving information from the user. In an optional embodiment, the input unit 120 may include a camera 121 for inputting an image signal and a microphone 123 for receiving an audio signal. In this regard, the camera 121 or the microphone 123 may be treated as a sensor, and the signal obtained from the camera 121 or the microphone 123 may be referred to as sensing data or sensor information.

The input unit 120 may obtain input data or the like to be used in response to that an output is obtained using training data for the model learning and the learning model. The input unit 120 may obtain the unprocessed input data. In this case, the controller 180 may extract input features by pre-processing the input data.

The camera 121 is located in a front portion to sense an obstacle in front, and as shown in FIG. 3, the plurality of cameras 121 may be arranged at different angles. The plurality of cameras 121 with different capturing directions, such as a camera that widely recognizes an area ahead and a camera that captures the floor, may be arranged.

Alternatively, cameras with different functions may be disposed. For example, a wide-angle camera, an infrared camera, and the like may be disposed. As the sensor 140, the camera may play a role in sensing a surrounding object.

The user input unit 122 may include a button or a touch panel overlapping a display 151. Alternatively, a user command may be input remotely via the transceiver 110. In this case, the user input unit 122 may include the personal computer 400 or a remote control device disposed separately from the transport robot 100.

Because the user input unit 122 includes all methods for receiving the user command, the user input unit 122 may recognize the user command via voice recognition. That is, a voice recognition device that extracts the user command by analyzing voice collected by the microphone 123 may also serve as the user input unit 122.

The input unit 120 may include an item information input unit. The item information input unit may receive size information, weight information, destination information, information on a transport requester, and the like of the item. In this regard, the item information input unit may include a code reader.

The sensor 140 may use various sensors to obtain at least one of information on an inner side of the transport robot 100, information on a surrounding environment of the transport robot 100, or user information.

In this regard, the sensor 140 may include various types of sensors to recognize the surroundings for autonomous driving. Representative examples may include a distance sensor or proximity sensor 141 and a LIDAR 142.

The proximity sensor 141 may include an ultrasonic sensor that recognizes a nearby object and determines a distance to the object based on a return time of an emitted ultrasonic wave. The proximity sensor 141 may include a plurality of proximity sensors along a perimeter, and the proximity sensor may also be disposed in an upper portion to sense an obstacle above.

The LIDAR 142 is a device that emits a laser pulse and receives light reflected from a surrounding target object to accurately depict the surroundings. A principle thereof is similar to that of a radar, but an electromagnetic wave used is different, so that a technology used and a scope of use are different.

Laser may damage human vision because light with a wavelength in a range from 600 to 1000 nm is used. The LIDAR 142 uses a wavelength greater than the above range, and is used in measurement of not only the distance to the target object, but also a speed and a direction of movement, and a temperature, and surrounding atmospheric substance analysis and concentration measurement.

In addition, the sensor 140 may include an illumination sensor, an acceleration sensor, a magnetic sensor, a gyro sensor, an inertial sensor, an RGB sensor, an infrared sensor, a fingerprint recognition sensor, an ultrasonic sensor, an optical sensor, a hall sensor, and the like.

The output unit 150 may generate output related to vision, hearing, tactile sensation, or the like. The output unit 150 may include an optical output unit, the display 151, and the like that outputs visual information, a speaker 152 that outputs auditory information, an ultrasonic output unit or the like that outputs an ultrasonic signal within an inaudible frequency, and a haptic module that outputs tactile information.

The memory 185 stores data that supports various functions of the transport robot 100. The memory 185 may store multiple application programs (or applications) running on the transport robot 100, data for the operation of the transport robot 100, and commands.

In addition, the memory 185 may store information necessary to perform the calculation using the artificial intelligence, machine learning, and an artificial neural network. The memory 185 may store a deep neural network model. The deep neural network model may be used to infer a result value for new input data other than training data, and the inferred value may be used as basis for determination to perform a certain operation.

The power supply 190 receives external power and internal power under control of the processor 190 and supplies the power to each component of the transport robot 100. Such power supply 190 may include a battery 191, and the battery 191 may be a built-in battery or a replaceable battery. The battery may be charged using a wired or wireless charging scheme, and the wireless charging scheme may include a magnetic induction scheme or a magnetic resonance scheme.

The mover 170, as means for moving the transport robot 100, may include wheels or legs, and may include the wheel driver and a leg driver that respectively control the wheels and legs. The transport robot 100 including the body 130 may be moved by controlling the plurality of wheels disposed on a bottom surface of the wheel driver. The wheels may include a main wheel for fast movement, a caster for changing a direction, an auxiliary caster for stable movement to prevent a loaded item L from falling during the movement, and the like.

The leg driver (not shown) may control the plurality of legs under control of the controller 180 to move the body 130. The plurality of legs may correspond to a component formed for the transport robot 100 to walk or run. The number of plurality of legs may be four, but the embodiment may not be limited thereto. The plurality of legs may be coupled to the body 130 to form an integrated body, or may be implemented to be detachable from the body.

The transport robot 100 may move the body via the mover 170 including at least one of the wheel driver and/or the leg driver. However, herein, an example in which the wheel driver is mounted on the transport robot 100 is mainly described.

The controller 180 is a module that controls the components of the transport robot 100. The controller 180 may refer to a data processing device built into hardware that has a physically structured circuit to perform a function expressed as codes or instructions included in a program. Examples of the data processing device built into the hardware may include a microprocessor, a central processing unit (CPU), a processor core, a multiprocessor, an application-specific integrated circuit (ASIC), and a field programmable gate array (FPGA), but the scope of the present disclosure may not be limited thereto.

The transport robot 100 may include the loading space 135 in the body 130, and the loading space 135 may include a side wall or cover 131 to protect the same from falling. Referring to FIG. 3, it is shown that the cover 131 is disposed, but a top surface may be omitted and only the side wall may be disposed.

The loading space 135 does not have a separate floor distinction on the drawing, but is able to be composed of a plurality of floors to load a plurality of items into floors. Further, after unloading the lower item L, an upper item may be moved to a lower floor and additionally unloaded.

The controller 180 may collect at least one of number information, weight information, size information, delivery order information, and security level information of the items L to be disposed in the loading space 135. For example, the controller 180 may collect the above information via the input unit 120. The input of the input unit 120 may also include a touch input on the display.

Based on the collected information, the controller 180 may transmit information on the item L loaded in the loading space 135 to the mobile terminal 200 (in FIG. 1) via the transceiver 110.

An unloading module 160 for unloading the item L loaded in the loading space 135 may be included. The unloading module 160 may include a conveyor 161 that constitutes a lower portion of the loading space 135. The conveyor 161 may include a conveyor belt 1611 that moves in a first direction where an unloading port is located, a roller 1612 that drives the conveyor belt, and a motor (not shown).

In the present disclosure, the conveyor 161 is in a form of covering an entirety of a bottom surface of the loading space 135, but when a size of the transport robot 100 is great, the conveyor 161 may be formed in a portion of the loading space 135. In this case, the plurality of items L may be loaded, and a pusher (not shown) that pushes the item L loaded in an area other than the conveyor 161 to the conveyor 161 may be further included.

The conveyor 161 is spaced apart from the floor, so that a slope module 165 that allows the item L to stably move from the conveyor 161 to the floor may be further included. The slope module 165 may constitute an inclined surface extending from the conveyor 161 to the floor while being retracted into and extended from the body.

FIG. 3 is a rear perspective view showing a first state of the transport robot 100 according to an embodiment of the present disclosure.

The transport robot 100 includes the body 130 including the loading space 135 defined therein, and the mover 170 located beneath the body 130. A cover that surrounds the loading space and forms the outer appearance of the robot may be included, or the cover may be omitted such that the loading space is exposed as shown in FIG. 3.

However, to prevent the loaded item from leaving the loading space 135 and to protect the unloading module 160 inside, frames 131 and 132 surrounding a perimeter of the loading space 135 may be included.

The frames 131 and 132 in the present embodiment may include side frames 132 located at left and right sides perpendicular to the movement direction, and a top frame 131 that covers the top surface and grabs the side frames 132 at the left and right sides so as not to spread.

Although a front side is not shown in the present embodiment, a front frame for the camera and the various sensors for the movement is located and a vertical driver 162 of the unloading module 160 is located, so that the item does not fall forward. Further, a door (not shown) that may be opened or closed for the unloading may be located at a rear side.

Basically, the body includes a base 133, the side frames 132 and the top frame 131 surrounding the loading space 135 located on the base 133, and includes the mover 170 beneath the same and includes a bottom frame 134 on which heavy components such as the controller 180, the battery 190, or the like are mounted.

The side frames 132 may be in a closed solid type or may include a plurality of side frames in a pillar form as shown in FIG. 3.

The loading space 135 is a space surrounded by the base 133, the side frames 132, and the top frame 131, and the unloading module 160 is included to automatically unload the item loaded in the loading space 135.

The unloading module 160 in the present disclosure is composed of a loading box 164 in which the item is loaded, a horizontal driver 161 that moves the loading box 164 in a front and rear direction in the loading space 135, the vertical driver 162 that moves the loading box 164 in a vertical direction, and a link module 163 that opens a bottom surface of the loading box 164 and unloads the item onto the ground.

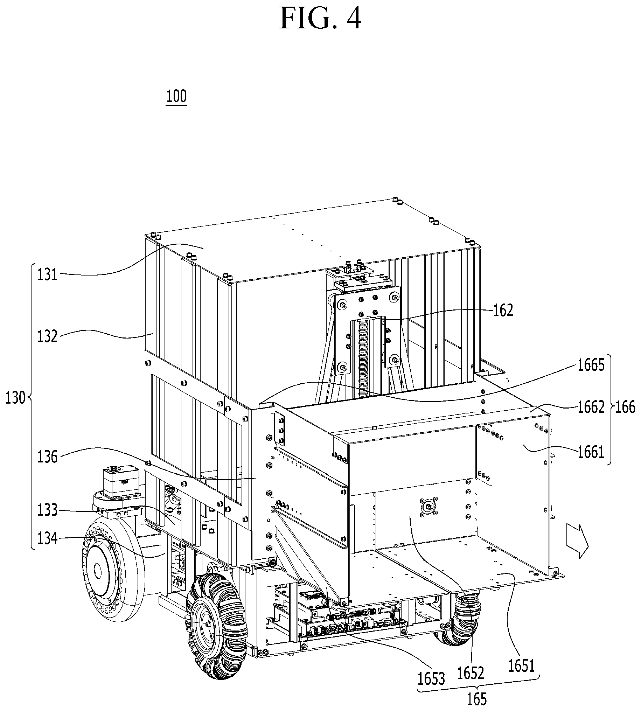

FIG. 4 is a diagram showing a second state in which the loading box 164 of the transport robot 100 is extended in a rearward direction according to an embodiment of the present disclosure. As shown in FIG. 3, the horizontal driver 161 may extend the loading box 164 located inside the body, that is, in the loading space 135, in the rearward direction. When the loading space 135 is extended rearwardly of the lower base 133, a space for the loading box 164 to move downward is created.

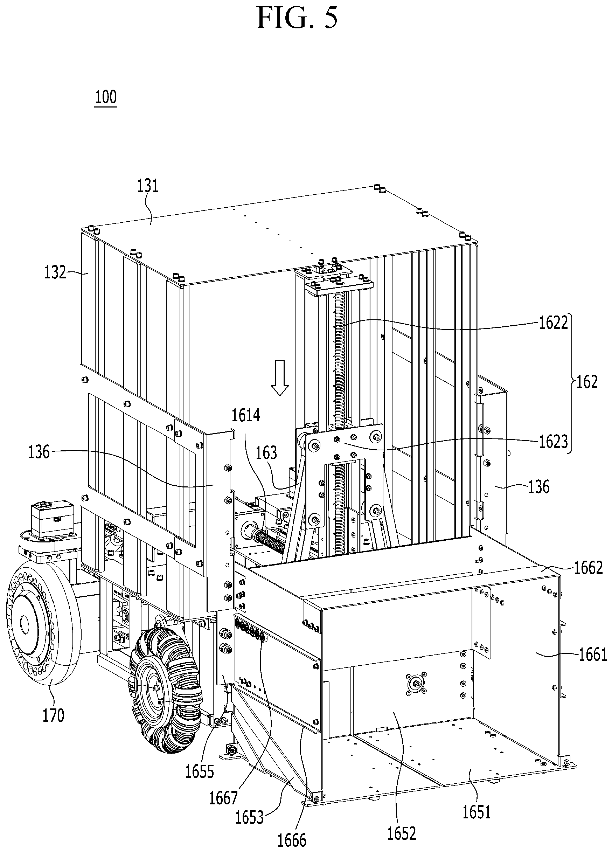

FIG. 5 is a diagram showing a third state in which the loading box 164 of the transport robot 100 primarily descends according to an embodiment of the present disclosure. When the movement of the horizontal driver 161 is completed, the vertical driver 162 moves the loading box 164 downward. The horizontal driver and the loading box 164 are connected to the link module 163, and the link module 163 descends while maintaining a shape thereof without a change during the primary descending.

The loading box 164 may include a pair of loading frames 165 that are bilaterally symmetrical to each other, and may include a side holder 166 that overlaps the loading frames 165. As shown in FIG. 4, the loading frame 165 may include a front surface 1652 coupled to the vertical driver 162 via the link module 163, and a bottom surface 1651 on which the item is loaded. When moving vertically, there is no structure to support a lower portion of the loading box 164 and there is a structure that only fixes the front surface 1652, so that the bottom surface of the loading box 164 may sag downward and the item may spill out.

For rigidity of the bottom surface 1651, a reinforcing frame 1653 that connects the front portion 1652 with the lower surface portion 1651 may be included. The reinforcing frame 1653 does not need to cover an entirety of a side surface of the loading box 164. As shown in FIG. 5, considering a direction in which the bottom surface 1651 receives a force, the reinforcing frame 1653 may be formed in a shape extending diagonally from a rear end of the bottom surface 1651 to the front surface 1652.

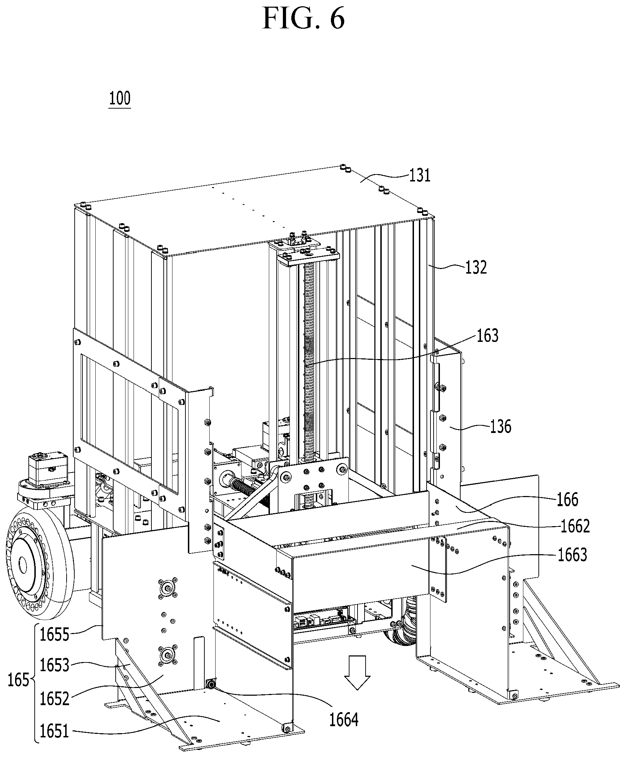

FIG. 6 is a diagram showing a fourth state in which the loading box 164 of the transport robot 100 secondarily descends according to an embodiment of the present disclosure. During the primary descending, the loading box 164 has not yet reached the ground and is spaced a predetermined distance away from the ground, and the vertical driver 162 further descends after the primary descending to perform the secondary descending.

The loading box 164 includes the loading frames 165 that split in the left and right direction during the secondary descending. The loading frames 165 may have a bilaterally symmetric shape and may split at a center of the loading box 164 and spread in the left and right direction. When the loading frames 165 split, the bottom surface of the loading box 164 opens and the item loaded in the loading box 164 falls to the ground.

In this regard, the loading box 164 may include the side holder 166 located on left and right sides of the item such that the item located in the loading box 164 does not move together with the bottom surface 1651 of the loading frame 165. The side holder 166 includes side walls that limit a movement in the left and right direction of the loaded item and bridge brackets 1662 and 1663 that fix a spacing between the side walls.

The pair of side walls are fixed with the bridge brackets 1662 and 1663, and the side holder 166 is hung on the front surface 1652 of the loading frame 165 with a hook 1665. A location of the side holder relative to the loading frame 165 does not change in the first to third states. However, when switching from the third state to the fourth state, the loading frames 165 expand in the left and right direction and locations of the pair of side walls do not change.

The side holder 166 may include the hook 1665 hooked to the loading frame 165 such that the side holder 166 maintains the location thereof independently when the loading frames 165 expand. The hook 1665 located at an upper end of the side wall is hooked to an upper end of the front surface 1652 of the loading frame 165 and coupled to the loading frame 165. The loading frame 165 may include a holder roller 1664 to reduce friction between the bottom surface 1651 and the side holder 166 when the loading frame 165 slides.

The side holder 166 maintains a constant spacing from the front surface 1652 of the loading frame 165 in the front and rear direction, and does not interfere with a horizontal sliding movement of the loading frame 165. The side holder 166 slides horizontally relative to the loading frames 165 when the pair of loading frames 165 expand.

The bridge brackets 1662 and 1663 may be located on at least one of the front surface and the top surface, as shown in FIGS. 3 to 6. When only the bridge bracket 1663 on the front surface is located, the spacing between the side walls on a rear side may increase, so that the rear bridge bracket 1662 is located on a rear side of the top surface.

The side holder 166 does not change in the location relative to the loading frame 165 in the first state (FIG. 3) in which the loading box 164 is located inside the body, the second state (FIG. 4) in which the loading box 164 is extended in the rearward direction, and the third state (FIG. 5) in which the loading box 164 primarily descends.

During the further secondary descending after the primary descending, the loading frames 165 open and the state is switched to the fourth state, as shown in FIG. 6. In the fourth state, the spacing between the side walls of the side holder 166 does not change, so that the item does not move laterally and only the loading frames 165 move, and the item is unloaded to the ground.

Hereinafter, a configuration and operation of the unloading module 160 during the state switch from the first state to the fourth state as shown in FIGS. 3 to 6 will be described in detail.

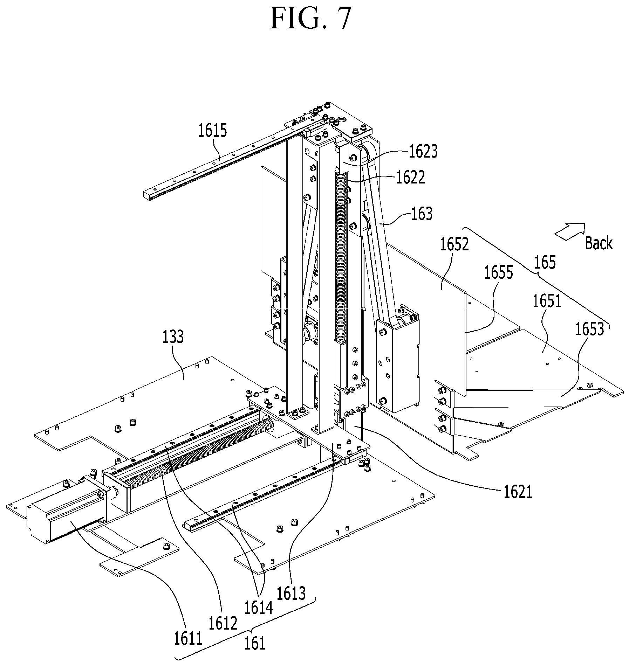

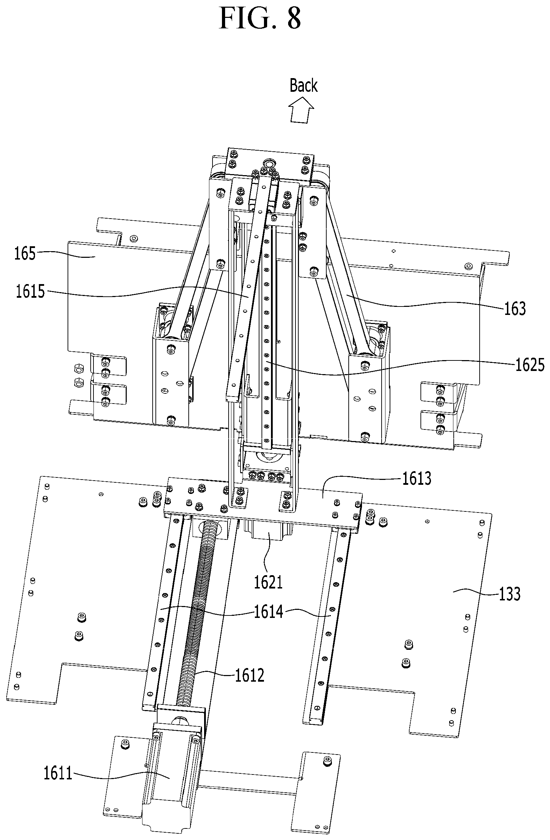

FIGS. 7 and 8 are diagrams showing the unloading module 160 of the transport robot 100 according to an embodiment of the present disclosure. FIG. 7 is an anterolateral view, and FIG. 8 is a front top view.

FIGS. 7 and 8 show the second state in FIG. 4, which is the state in which the horizontal driver 161 has moved the loading box 164 in the rearward direction. This is a drawing in which some components, such as the top frame 131 and the like of the body, are omitted such that the unloading module 160 is clearly seen.

The unloading module 160 is composed of the loading box 164, the link module 163, the vertical driver 162, and the horizontal driver 161. As described above, the loading box 164 is composed of the pair of loading frames 165 that are bilaterally symmetrical with each other, and the loading frame 165 includes the bottom surface 1651, the front surface 1652, and the reinforcing frame 1653 that connects the bottom surface 1651 with the front surface 1652 to prevent sagging of the bottom surface 1651.

The horizontal driver 161 that is directly fixed to the body includes a horizontal ball screw 1612 extending in the front and rear direction and a horizontal movement bracket 1613 that moves along the horizontal ball screw 1612. When the motor fixed to the body 130 rotates, the horizontal ball screw 1612 may rotate and the horizontal movement bracket 1613 may move in the front and rear direction.

The vertical driver 162 may further include a first horizontal linear guide 1614 that is coupled to the horizontal movement bracket 1613, extends in the front and rear direction in the same way as the horizontal ball screw 1612 for the stable movement of the vertical driver 162, and is disposed on a side of the horizontal ball screw 1612.

The first horizontal linear guide 1614 may be disposed on each of left and right sides of the horizontal ball screw 1612, and the horizontal movement bracket 1613 may extend from the horizontal ball screw 1612 and be moved by being fastened to the horizontal linear guide.

The horizontal movement bracket 1613 may have a screw nut coupled with the horizontal ball screw 1612 and a guide block coupled with the linear guide, and the screw nut and guide block may be located at a lower portion and the vertical driver 162 may be located at an upper portion.

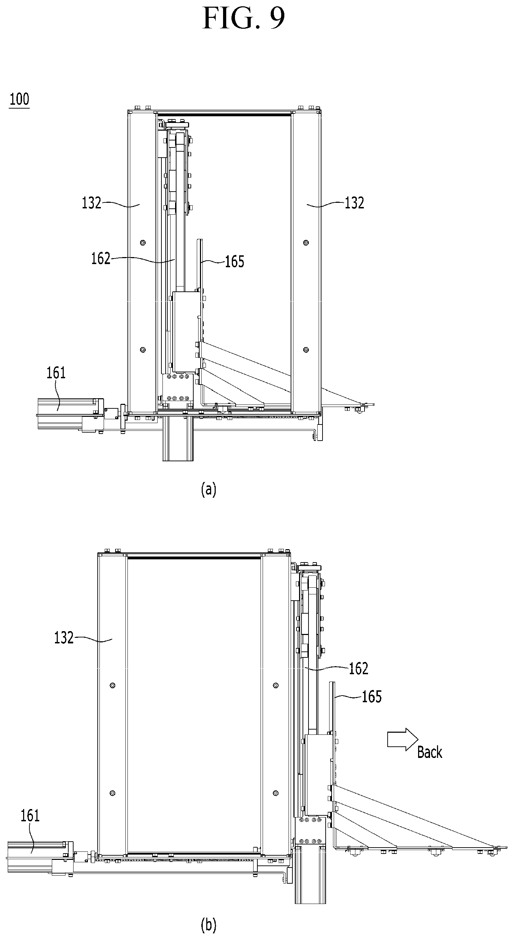

FIG. 9 is a side view showing the movement of the unloading module 160 when switching from the state in FIG. 2 to the state in FIG. 3, in which (a) shows the first state and (b) shows the second state. The vertical driver 162, the link module 163, and the loading frame 165 may move rearwards by the horizontal driver 161, and the loading box 164 may protrude rearwardly of the base 133 of the body 130. In the state in which the loading frame 165 protrudes rearwards and a bottom thereof is open, the loading frame 165 may move downward via the vertical driver 162.

However, when the bottom surface of the loading frame 165 is not supported by the base 133, the loading frame 165 may sag because of a weight of the item loaded on the loading frame 165. Because the loading frame 165 is fixed to the body 130 via the link module 163 at the front surface 1652, a connection portion 1633 between the loading frame 165 and the link module 163 may be damaged.

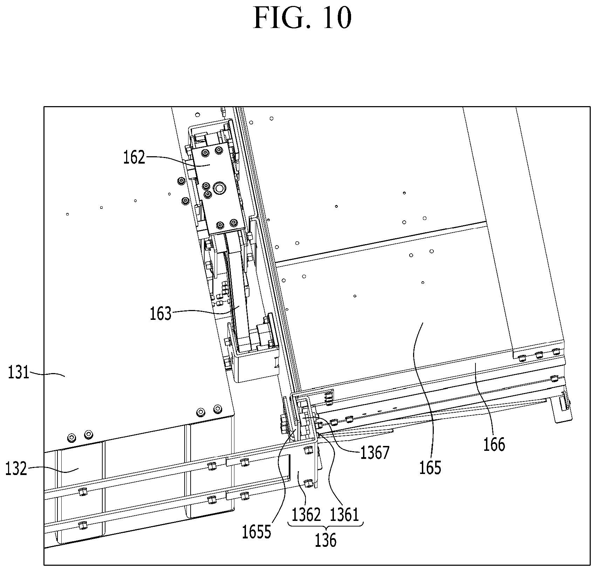

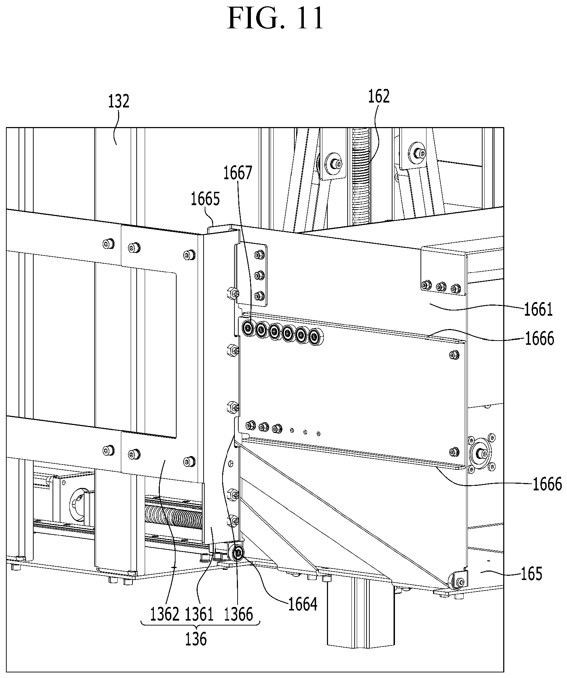

FIGS. 10 and 11 are views showing the loading box 164, the side holder 166, and the support frame 136 in the state in which the loading box 164 is extended, as shown in FIG. 4. As shown in FIG. 10, a loading box support 1361 on which an end of the front surface 1652 of the loading frame 165 is engaged may be further included.

The loading box 164 may include a wing 1655 that protrudes outwardly of a side surface thereof. The loading box support 1361 protrudes on each of left and right sides of a rear surface of the loading space 135 and overlaps the wing 1655 in the front and rear direction.

The wing 1655 protrudes outwards beyond a lateral width of the loading box 164 defined by the side walls of the side holder 166 and is in contact with the loading box support 1361 of the support frame 136 as shown in FIG. 10 in the second state.

Because the wing 1655 is supported by the loading box support 1361, the loading box 164 does not tilt rearwards, so that the item may remain stably loaded in the loading box 164.

As shown in FIG. 11, the support frame 136 may include a side fixing portion 1362 bent by 90 ° from the loading box support 1361 and extending in the forward direction. The side fixing portion 1362 may be coupled to the side frame 132 and may fix the loading box support 1361 to the body 130. The side fixing portion 1362 may be fastened to the side frame 132, so that the loading box support 1361 of the support frame 136 stably supports the loading frame 165.

Referring to FIG. 11, a guide bar 1666 protruding from an outer surface of the side wall of the side holder 166 may be included to guide the horizontal movement for switching from the first state to the second state. The guide bar 1666 in the present embodiment is constructed to reinforce rigidity by adding a member to a side surface of the side wall, and at the same time, to allow the loading box 164 to be extended in the rearward direction along a determined path. The guide bar 1666 may be implemented in a partially protruding beading shape by pressing the side wall.

The loading box support 1361 may have a guide groove 1366 defined at an end thereof such that the guide bar 1666 passes therethrough. When the loading box 164 is extended in the rearward direction, friction may occur between the guide bar 1666 and the guide groove 1366, so that a horizontal bearing 1667 may be included at a location below the guide bar 1666 and in contact with a lower portion of the guide groove 1366.

The horizontal bearing 1667 may be disposed only in a portion of the side wall 1661, and as shown in FIG. 11, the horizontal bearing 1667 may be disposed biased in the forward direction.

Referring again to FIGS. 7 and 8, the vertical driver 162 extends in an elongate manner in the vertical direction, and thus, an upper end of the vertical driver 162 may be unstable when the horizontal movement bracket 1613 located beneath the vertical driver 162 moves.

When the loading box 164 moves horizontally, a second horizontal linear guide 1615 may be further disposed at the top to ensure the stability of the upper end of the vertical driver 162. The second horizontal linear guide 1615 may be disposed on a bottom surface of the top frame 131, and the vertical driver 162 may be located between the horizontal movement bracket 1613 and the second horizontal linear guide 1615.

The vertical driver 162 includes a vertical ball screw 1622 extending in the vertical direction and a vertical movement bracket 1623 that moves along the vertical ball screw 1622. The vertical movement bracket 1623 is coupled to the second end 1633 of the link described above. The vertical movement bracket 1623 connected to the loading frame 165 may further include a vertical linear guide 1625 to move stably without tilting.

The vertical linear guide 1625 is disposed in parallel with the vertical ball screw 1622. The vertical movement bracket 1623 may move in the vertical direction along the vertical linear guide 1625 and the vertical ball screw 1622, allowing the item in the loading box 164 to be unloaded stably without falling.

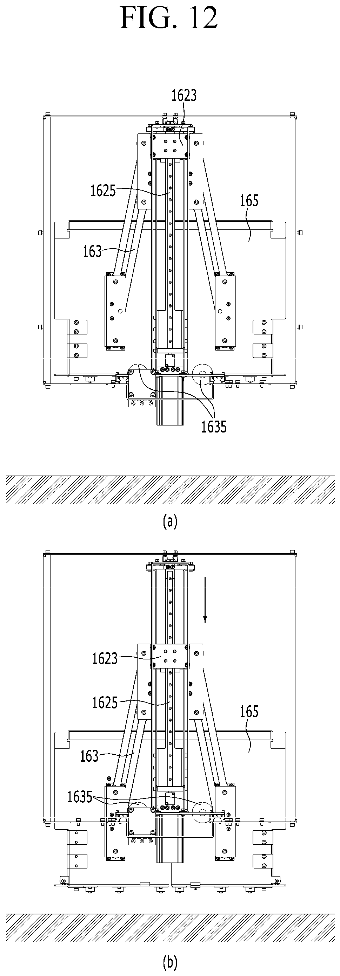

FIG. 12 is a front view showing the primary downward movement of the unloading module 160 of the transport robot 100 according to an embodiment of the present disclosure. (a) is a front view of the second state before the primary descending, and (b) is a front view of the third state after the primary descending.

The case in which the vertical driver 162 in the present disclosure descends to be in the third state as shown in FIG. 5 is referred to as the primary descending, and the case in which the vertical driver 162 further descends to be in the expanded state of the loading frames 165 is referred to as the secondary descending.

During the primary descending, the loading frame 165 maintains an original location thereof, and the link module 163 also maintains the same parallelogram shape. In the primary descending, the vertical driver 162 has not completely lowered the loading frame 165 to the floor, so that the loading frame 165 is spaced by a predetermined distance apart from the floor and a link 1631 is in contact with a caster 1635, which will be described later.

To reduce friction between the loading box 164 and the loading box support 1361 during the primary descending, a vertical bearing 1367 may be included on a front surface of the loading box support 1361, as shown in FIG. 10. The vertical bearing 1367 may be coupled to the front surface of the loading box support 1361 and may be disposed in contact with the side wall. When the loading box 164 primarily descends, the vertical bearing 1367 may rotate and reduce the friction.

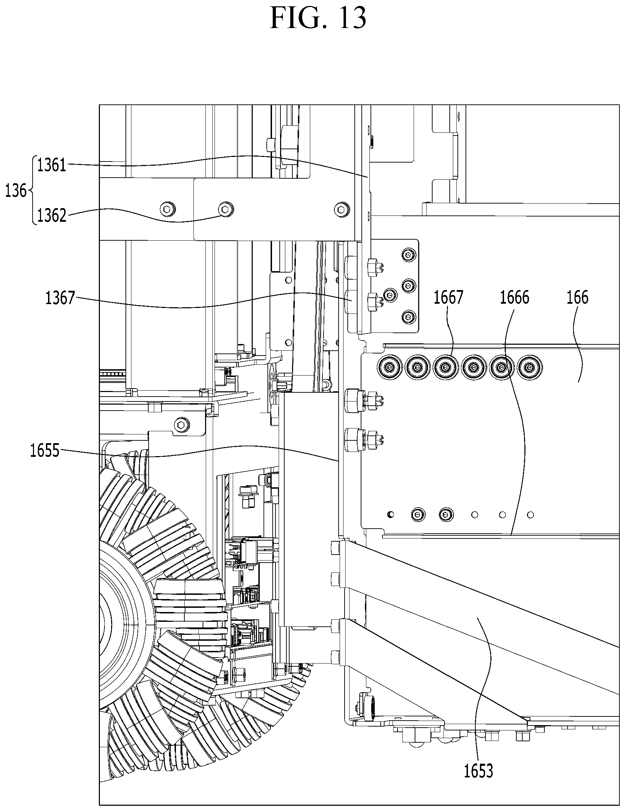

FIG. 13 is a diagram showing the loading box 164 and the support frame 136 in the state in which the unloading module 160 of the transport robot 100 according to an embodiment of the present disclosure has primarily descended. The support frame 136 is composed of the loading box support 1361 that is located on a rear surface of the support frame 136 and in contact with the wing 1655 of the loading frame 165, and the side fixing portion 1362 coupled to the side frame 132.

A length of the side fixing portion 1362 is smaller than that of the loading box support 1361, and a lower end of the side fixing portion 1362 is located upwardly of a lower end of the loading box support 1361. The loading box support 1361 extends sufficiently downwards such that the wing 1655 of the loading frame 165 remain overlapped with the loading box support 1361 even after the primary descending of the loading frame 165.

However, during the secondary descending, the loading frames 165 expand in the left and right direction as shown in FIG. 6, so that interference with the side fixing portion 1362 may occur. As the lower end of the side fixing portion 1362 is disposed upwardly of that of the loading box support 1361, the loading frame 165 may be expanded without being caught in the side fixing portion 1362.

Referring again to FIG. 8, the link module 163 that expands the loading frames 165 when switching from the third state to the fourth state will be described. The link module 163 is connected to the front surface of the loading frame 165. The link module 163 may be formed in a bilaterally symmetric shape so as to be coupled to each of the pair of loading frames 165.

The link module 163 may include the bar-shaped link 1631. A first end 1632 of the link 1631 is pivotably coupled to the loading frame 165, and a second end 1633 thereof is pivotably coupled to the vertical movement bracket 1623 of the vertical driver 162.

The link 1631 may include a pair of links coupled to the one loading frame 165 such that the loading frame 165 is stably fixed without tilting. The pair of links 1631 may be arranged vertically side by side as shown in FIG. 12. The first end 1632 and the second end 1633 may be arranged side by side at a predetermined distance. As shown in (b) in FIG. 12, when the ends 1632 of the pair of links 1631 are connected to each other and the ends 1633 of the pair are connected to each other, form a parallelogram may be formed.

The link module 163 may include the caster 1635, and each caster 1635 may be disposed on each of the pair of links 1631 as shown in FIG. 12. As shown in (b) in FIG. 12, when the primary descending is completed and the third state is reached, the link touches the caster 1635, and when the link touches the caster 1635, an angle of the link may change.

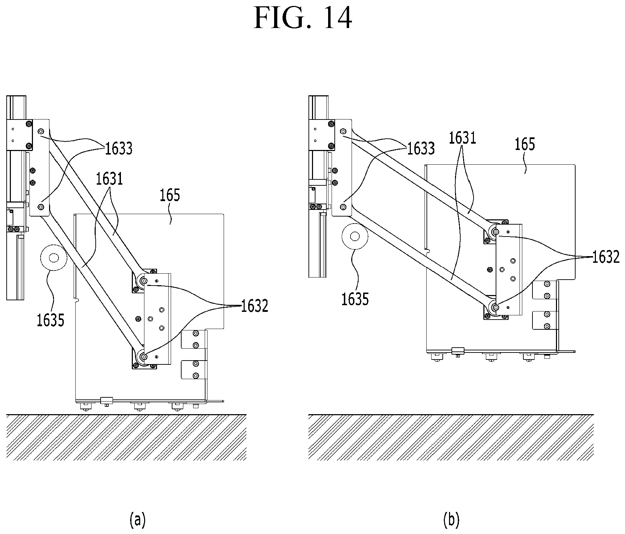

FIG. 14 is a diagram showing the secondary downward movement of the unloading module 160 of the transport robot 100 according to an embodiment of the present disclosure. As shown in (a) in FIG. 14, as the links 1631 pivot by the casters 1635, an area size of the parallelogram formed by the pair of links changes. Up to a certain range, the bottom surface 1651 of the loading frame 165 moves closer to the ground, but may move away from the ground again when a certain angle is reached.

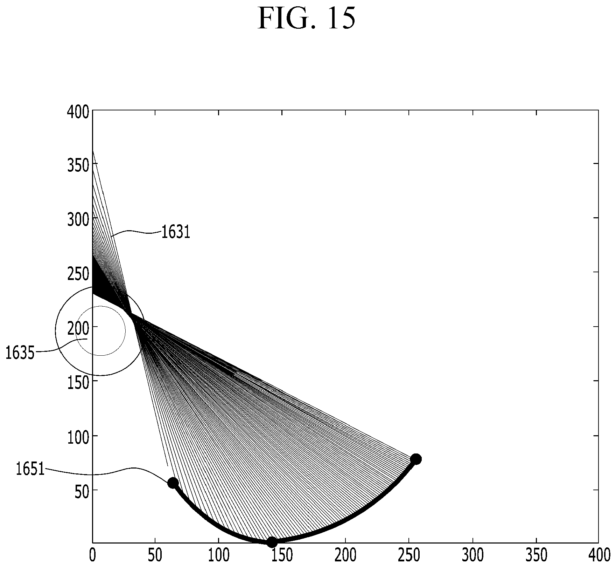

FIG. 15 is a graph showing a trajectory of the link module 163 of the transport robot 100 according to an embodiment of the present disclosure. When a length of the link is constant and a vertical level of the second end 1633 changes by the vertical driver 162 (a y-axis), a trajectory of the first end 1632 descends in a curve and then ascends again.

The trajectory may vary depending on the location of the caster 1635 and the length of the link 1631, and the fourth state may end when the link 1631 is located at the lowermost level.

Because the locations of the pair of links 1631 are fixed in the vertical direction, the bottom surfaces 1651 of the loading frames 165 may be expanded in a parallel state.

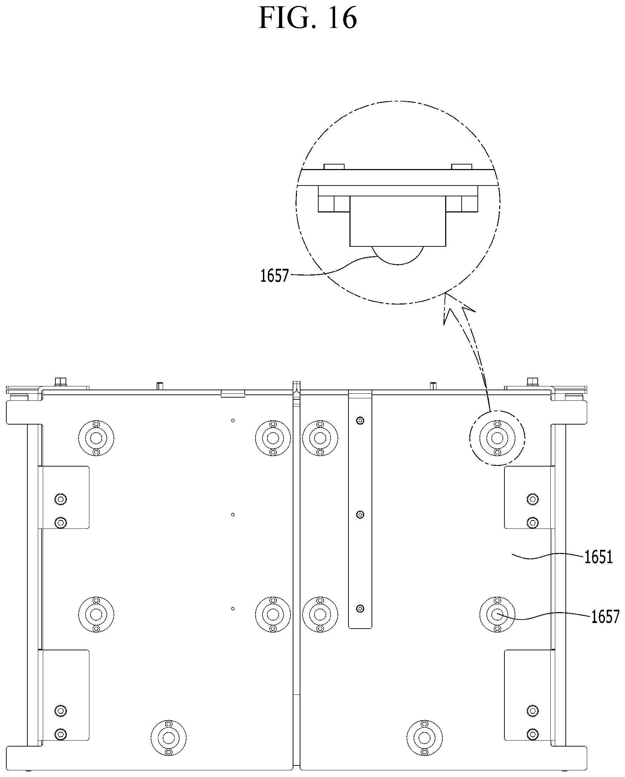

FIG. 16 is a diagram showing the bottom surface of the loading box 164 of the transport robot 100 according to an embodiment of the present disclosure.

When the bottom surface 1651 of the loading frame 165 touches the ground, it may be difficult for the loading frame 165 to perform the expanding movement because of friction between the bottom surface 1651 and the ground. In particular, the friction increases by the weight of the item loaded on the loading frame 165, so that the bottom surface 1651 of the loading frame 165 may be equipped with a ball roller 1657, a bearing, or the like, as shown in FIG. 16.

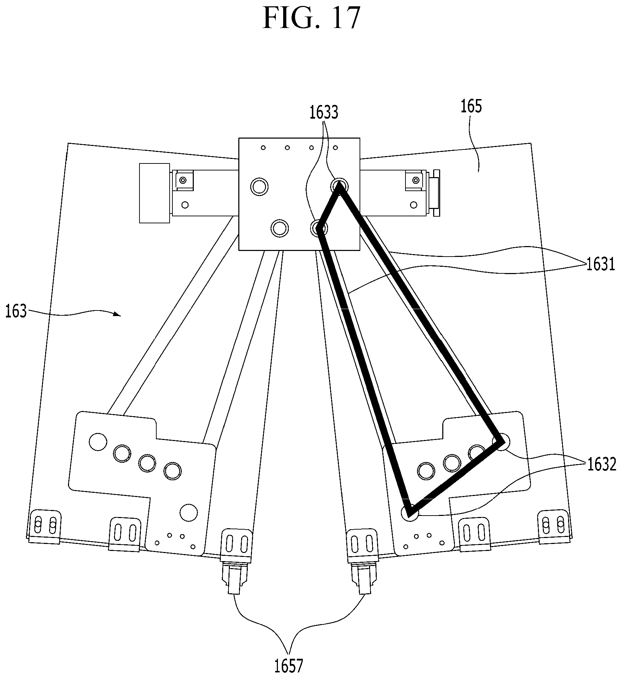

FIG. 17 is a diagram illustrating another embodiment of the link module 163 of the transport robot 100 according to an embodiment of the present disclosure. As shown in FIG. 17, a spacing between the first ends 1632 and a spacing between the second ends 1633 may be different from each other such that the pair of links 1631 form a trapezoid rather than the parallelogram.

In this case, when switching from the third state to the fourth state, the bottom surface 1651 may expand while tilting as shown in FIG. 17. In the present embodiment, the bottom surface 1651 is tilted and thus the loaded item may slip, but the tilted bottom surface 1651 is advantageous when unloading from the loading frame 165.

Because an outer side in the horizontal direction of the bottom surface 1651 extends away from the ground, the ball roller, the bearing, or the caster 1657 as shown in FIG. 17 may be disposed in a central portion of the loading box 164, which is a portion of the bottom surface 1651 closest to the ground.

When the secondary descending is completed, as shown in FIG. 6, the loading frames 165 open in the left and right direction, the bottom of the loading box 164 opens, and the side holder 166 restricts the horizontal movement of the item loaded in the loading box 164, so that the unloading onto the ground is completed as shown in FIG. 6.

As described above, in the transport robot 100 in the present disclosure, the loading box 164 may be automatically extended and the item may be easily unloaded from the loading space 135.

Additionally, the transport robot 100 in the present disclosure may automatically place the item on the floor, minimizing input of additional manpower for the unloading.

In addition, the transport robot 100 in the present disclosure may shorten an unloading time via an automated and non-face-to-face unloading system and reduce a delivery delay time resulted from waiting for item receipt.

The above embodiments are to be considered in all respects as illustrative and not restrictive. The scope of the invention is defined by the appended claims.

## Claims

1. A transport robot (100) comprising:
a body (130);
a mover (170) connected to a lower portion of the body (130), the mover (170) being configured to move the transport robot;
a loading box (164) retractable into and extendable from the body (130),
a horizontal driver (161) configured to move the loading box (164) in a front and rear direction with respect to the transport robot;
a vertical driver (162) configured to move the loading box (164) in a vertical direction; the transport robot **characterized by**:
the loading boxing (164) including a pair of loading frames (165) configured to move towards and away from each other in a left and right direction with respect to the transport robot; and
a link module (163) configured to spread the pair of loading frames (165) of the loading box (164) in the left and right direction to open a bottom of the loading box (164).

2. The transport robot (100) of claim 1, wherein each loading frame of the pair of loading frames (165) includes:
a bottom surface (1651);
a front surface (1652) coupled to the link module (163); and
a reinforcing frame (1653) connecting the bottom surface (1651) to the front surface (1652), and
wherein the bottom surfaces (1651) of the pair of loading frames (165) are configured to support one or more items.

3. The transport robot (100) of claim 2, wherein the body (130) includes:
a pair of side frames (132) located at left and right sides of the loading box (164); and
a pair of support frames (136) locate at left and right sides of the loading box (164), each support frame of the pair of support frames including a side fixing portion (1362) fixed to a corresponding side frame of the pair of side frames (132); and
a pair of loading box supports (1361) protruding from left and right ends of a rear surface of the body (130), and
wherein the front surface (1652) of each loading frame includes a wing (1655) configured to come into contact with a corresponding loading box support of the pair of loading box supports (1361) in response to the loading box (164) moving rearwards.

4. The transport robot (100) of claim 3, wherein each side fixing portion of the support frame (136) is located upwardly from a lower end of the corresponding loading box support, and
wherein an upper end of each wing (1655) is located downwardly from the side fixing portion and upwardly from the lower end of the corresponding loading box support in response to the loading box (164) being moved downwards by the vertical driver.

5. The transport robot (100) of claim 3 or claim 4, further comprising a side holder (166) located between the pair of loading frames, the side holder (166) being configured to fix a horizontal movement of the one or more items loaded in the loading box (164) such that the one or more items in the loading box (164) do not move with the loading frames (165) when the loading box (164) is opened, the side holder (166) including:
a pair of side walls (1661) located at left and right sides of the loading box; and
a bridge bracket (1663) connecting the pair of side walls (1661) to each other.

6. The transport robot (100) of claim 5, wherein each side wall (1661) of the pair of side walls (1661) includes:
a hook (1665) located at an upper front portion thereof, the hook (1665) being hooked to an upper portion of the front surface of a corresponding loading frame of the pair of loading frames; and
a holder roller (1664) located at a lower portion thereof, the holder roller (1664) being in contact with the bottom surface (1651) of the corresponding loading frame (165).

7. The transport robot (100) of claim 5 or claim 6, further comprising:
a guide bar (1666) protruding from an outer surface of each side wall (1661), the guide bar (1666) extending in a horizontal direction; and
a guide groove (1366) recessed from an end of the corresponding loading box support, the guide groove (1366) being configured to receive the guide bar (1666) of the corresponding side wall (1661) of the pair of side walls (1661).

8. The transport robot (100) of any of claims 5 to 7, further comprising a horizontal bearing (1667) fixed to the outer surface of each side wall (1661), the horizontal bearing (1667) configured to contact the corresponding loading box (164) while the loading box (164) moving rearwards.

9. The transport robot (100) of any of claims 5 to 8, further comprising a vertical bearing (1367) fixed to a front surface of each loading box support (1361), each vertical bearing (1367) being in contact with a corresponding side wall (1661) of the pair of side walls (1661).

10. The transport robot (100) of any of claims 1 to 9, wherein the vertical driver (162) includes a vertical movement bracket configured to move vertically, and
wherein the link module (163) includes a pair of link modules (163) coupled to the pair of loading frames, each link module (163) of the pair of link modules (163) including:
a first link (1631) including a first end pivotably coupled to a corresponding loading frame of the pair of loading frames (165) and a second end pivotably coupled to the vertical movement bracket of the vertical driver; and
a caster (1635) configured to come into contact with the first link in response to the vertical movement bracket moving downwards,
wherein the first link is configured to move the corresponding loading frame in a horizontal direction while an angle of the first link with respect to a floor decreases after coming into contact with the caster (1635).

11. The transport robot (100) of claim 10, wherein each link module (163) includes a second link (1631) having a first end pivotally coupled to the corresponding loading frame and a second end pivotably coupled to the vertical movement bracket of the vertical driver, and
wherein a spacing between the respective first ends of the first and second links is equal or greater than a spacing between the respective second ends of the first and second links.

12. The transport robot (100) of any of claims 10 to 11, wherein the vertical driver (162) further includes:
a vertical ball screw (1622) extending in the vertical direction, the vertical movement bracket being configured to move alone the vertical ball screw (1622); and
a vertical linear guide (1625) arranged in parallel with the vertical ball screw (1622), the vertical linear guide (1625) being coupled to the vertical movement bracket.

13. The transport robot (100) of any of claims 1 to 12, wherein the horizontal driver (161) includes:
a horizontal ball screw (1612) extending in a horizontal direction; and
a horizontal movement bracket (1613) configured to move along the horizontal ball screw (1612), the horizontal movement bracket (1613) being connected to the vertical driver,
wherein the horizontal driver (161) further includes a first horizontal linear guide arranged in parallel with the horizontal ball screw (1612), the first horizontal linear guide being configured to guide the horizontal movement of the horizontal movement bracket (1613).

14. The transport robot (100) of claim 13, wherein the horizontal driver (161) further includes a second horizontal linear guide arranged in parallel with the horizontal ball screw (1612), the second horizontal linear guide being coupled to an upper end of the vertical driver (162) to guide a horizontal movement of the vertical driver.

15. The transport robot (100) of any of claims 1 to 14, wherein each loading frame (165) of the pair of loading frames (165) includes a ball roller (1657) or a caster located on a bottom surface (1651) of each loading frame (165), the ball roller (1657) or the caster being configured to contact a floor in response to the loading frame (165) moving in the left and right direction.

## Patentansprüche

1. Transportroboter (100) umfassend:
einen Körper (130);
ein Bewegungselement (170), das mit einem unteren Abschnitt des Körpers (130) verbunden ist, wobei das Bewegungselement (170) dazu eingerichtet ist, den Transportroboter zu bewegen;
einen Ladekasten (164), der in den Körper (130) einziehbar und aus diesem herausfahrbar ist,
einen horizontalen Antrieb (161), der dazu eingerichtet ist, den Ladekasten (164) in einer vorderen und hinteren Richtung in Bezug auf den Transportroboter zu bewegen;
einen vertikalen Antrieb (162), der dazu eingerichtet ist, den Ladekasten (164) in einer vertikalen Richtung zu bewegen;
wobei der Transportroboter **gekennzeichnet ist durch**:
den Ladekasten (164), der ein Paar Laderahmen (165) umfasst, die dazu eingerichtet sind, sich in einer linken und rechten Richtung in Bezug auf den Transportroboter aufeinander zu und voneinander weg zu bewegen; und
ein Verbindungsmodul (163), das dazu eingerichtet ist, das Paar Laderahmen (165) des Ladekastens (164) in der linken und rechten Richtung zu spreizen, um einen Boden des Ladekastens (164) zu öffnen.

2. Transportroboter (100) nach Anspruch 1, wobei jeder Laderahmen des Paares von Laderahmen (165) umfasst:
eine Bodenfläche (1651);
eine mit dem Verbindungsmodul (163) verbundene Vorderseite (1652); und
einen Verstärkungsrahmen (1653), der die Bodenfläche (1651) mit der Vorderseite (1652) verbindet, und
wobei die Bodenflächen (1651) des Paares von Laderahmen (165) dazu eingerichtet ist, einen oder mehrere Gegenstände tragen zu können.

3. Transportroboter (100) nach Anspruch 2, wobei der Körper (130) umfasst:
ein Paar Seitenrahmen (132), die an der linken und rechten Seite des Ladekastens (164) angeordnet sind; und
ein Paar Stützrahmen (136), die an der linken und rechten Seite des Ladekastens (164) angeordnet sind, wobei jeder Stützrahmen des Paares von Stützrahmen einen Seitenbefestigungsabschnitt (1362) umfasst, der an einem entsprechenden Seitenrahmen des Paares von Seitenrahmen (132) befestigt ist; und
ein Paar Ladekastenhalter (1361), die von linken und rechten Enden einer Rückseite des Körpers (130) vorstehen, und
wobei die Vorderseite (1652) jedes Laderahmens einen Flügel (1655) aufweist, der dazu eingerichtet ist, mit einem entsprechenden Ladekastenhalter des Paares Ladekastenhalter (1361) in Kontakt zu kommen, wenn sich der Ladekasten (164) nach hinten bewegt.

4. Transportroboter (100) nach Anspruch 3, wobei jeder Seitenbefestigungsabschnitt des Stützrahmens (136) oberhalb eines unteren Endes des entsprechenden Ladekastenhalters angeordnet ist, und
wobei ein oberes Ende jedes Flügels (1655) in Reaktion auf die Abwärtsbewegung des Ladekastens (164) durch den vertikalen Antrieb unterhalb des Seitenbefestigungsabschnitts und oberhalb des unteren Endes des entsprechenden Ladekastenhalters angeordnet ist.

5. Transportroboter (100) nach Anspruch 3 oder Anspruch 4, ferner umfassend eine Seitenhalterung (166), die zwischen dem Paar Laderahmen angeordnet ist, wobei die Seitenhalterung (166) dazu eingerichtet ist, eine horizontale Bewegung des einen oder der mehreren in dem Ladekasten (164) geladenen Gegenstände so zu fixieren, dass sich der eine oder die mehreren Gegenstände in dem Ladekasten (164) nicht mit den Laderahmen (165) bewegen, wenn der Ladekasten (164) geöffnet wird, wobei der Seitenhalter (166) umfasst:
ein Paar Seitenwände (1661), die an der linken und rechten Seite des Ladekastens angeordnet sind; und
eine Brückenhalterung (1663), die das Paar Seitenwände (1661) miteinander verbindet.

6. Transportroboter (100) nach Anspruch 5, wobei jede Seitenwand (1661) des Paares von Seitenwänden (1661) umfasst:
einen Haken (1665), der an einem oberen vorderen Abschnitt davon angeordnet ist, wobei der Haken (1665) an einem oberen Abschnitt der Vorderseite eines entsprechenden Laderahmens des Paares von Laderahmen eingehängt ist; und
eine Halterungsrolle (1664), die an einem unteren Abschnitt davon angeordnet ist, wobei die Halterungsrolle (1664) mit der Bodenfläche (1651) des entsprechenden Laderahmens in Kontakt steht (165).

7. Transportroboter (100) nach Anspruch 5 oder Anspruch 6, ferner umfassend:
eine Führungsstange (1666), die aus einer Außenfläche jeder Seitenwand (1661) herausragt, wobei sich die Führungsstange (1666) in horizontaler Richtung erstreckt; und
eine Führungsnut (1366), die von einem Ende des entsprechenden Ladekastenhalters zurückgesetzt ist, wobei die Führungsnut (1366) dazu eingerichtet ist, die Führungsstange (1666) der entsprechenden Seitenwand (1661) des Paares von Seitenwänden (1661) aufzunehmen.

8. Transportroboter (100) nach einem der Ansprüche 5 bis 7, ferner umfassend ein horizontales Lager (1667), das an der Außenfläche jeder Seitenwand (1661) befestigt ist, wobei das horizontale Lager (1667) dazu eingerichtet ist, den entsprechenden Ladekasten (164) und zu berühren, während sich der Ladekasten (164) nach hinten bewegt.

9. Transportroboter (100) nach einem der Ansprüche 5 bis 8, der ferner ein vertikales Lager (1367) umfasst, das an einer Vorderseite jedes Ladekastenhalters (1361) befestigt ist, wobei jedes vertikale Lager (1367) mit einer entsprechenden Seitenwand (1661) des Paares von Seitenwänden (1661) in Kontakt steht.

10. Transportroboter (100) nach einem der Ansprüche 1 bis 9, wobei der vertikale Antrieb (162) eine vertikale Bewegungshalterung umfasst, die dazu eingerichtet ist, sich vertikal zu bewegen, und
wobei das Verbindungsmodul (163) ein Paar Verbindungsmodule (163) umfasst, die mit dem Paar Laderahmen gekoppelt sind, wobei jedes Verbindungsmodul (163) des Paares Verbindungsmodule (163) umfasst:
ein erstes Verbindungsglied (1631) mit einem ersten Ende, das schwenkbar mit einem entsprechenden Laderahmen des Paares von Laderahmen (165) verbunden ist, und einem zweiten Ende, das schwenkbar mit der vertikalen Bewegungshalterung des vertikalen Antriebs verbunden ist; und
eine Rolle (1635), die dazu eingerichtet ist, mit dem ersten Verbindungsglied in Kontakt zu kommen, wenn sich die vertikale Bewegungshalterung nach unten bewegt,
wobei das erste Verbindungsglied dazu eingerichtet ist, den entsprechenden Laderahmen in horizontaler Richtung zu bewegen, während sich der Winkel des ersten Verbindungsglieds in Bezug auf den Boden verringert, nachdem es mit der Rolle (1635) in Kontakt gekommen ist.

11. Transportroboter (100) nach Anspruch 10, wobei jedes Verbindungsmodul (163) ein zweites Verbindungsglied (1631) mit einem ersten Ende, das schwenkbar mit dem entsprechenden Laderahmen verbunden ist, und einem zweiten Ende, das schwenkbar mit der vertikalen Bewegungshalterung des vertikalen Antriebs verbunden ist, umfasst, und
wobei ein Abstand zwischen den jeweiligen ersten Enden des ersten und zweiten Glieds gleich oder größer ist als ein Abstand zwischen den jeweiligen zweiten Enden des ersten und zweiten Glieds.

12. Transportroboter (100) nach einem der Ansprüche 10 bis 11, wobei der vertikale Antrieb (162) ferner umfasst:
eine vertikale Kugelumlaufspindel (1622), die sich in vertikaler Richtung erstreckt, wobei die vertikale Bewegungshalterung dazu eingerichtet ist, allein die vertikale Kugelumlaufspindel (1622) zu bewegen; und
eine vertikale Linearführung (1625), die parallel zur vertikalen Kugelumlaufspindel (1622) angeordnet ist, wobei die vertikale Linearführung (1625) mit der vertikalen Bewegungshalterung gekoppelt ist.

13. Transportroboter (100) nach einem der Ansprüche 1 bis 12, wobei der horizontale Antrieb (161) umfasst:
eine horizontale Kugelumlaufspindel (1612), die sich in horizontaler Richtung erstreckt; und
einen horizontalen Bewegungshalter (1613), der dazu eingerichtet ist, sich entlang der horizontalen Kugelumlaufspindel (1612) zu bewegen, wobei der horizontale Bewegungshalter (1613) mit dem vertikalen Antrieb verbunden ist,
wobei der horizontale Antrieb (161) ferner eine erste horizontale Linearführung umfasst, die parallel zur horizontalen Kugelumlaufspindel (1612) angeordnet ist, wobei die erste horizontale Linearführung dazu eingerichtet ist, die horizontale Bewegung des horizontalen Bewegungshalters (1613) zu führen.

14. Transportroboter (100) nach Anspruch 13, wobei der horizontale Antrieb (161) ferner eine zweite horizontale Linearführung umfasst, die parallel zur horizontalen Kugelumlaufspindel (1612) angeordnet ist, wobei die zweite horizontale Linearführung mit einem oberen Ende des vertikalen Antriebs (162) gekoppelt ist, um eine horizontale Bewegung des vertikalen Antriebs zu führen.

15. Transportroboter (100) nach einem der Ansprüche 1 bis 14, wobei jeder Laderahmen (165) des Paares von Laderahmen (165) eine Kugelrolle (1657) oder eine Lenkrolle aufweist, die an einer Bodenfläche (1651) jedes Laderahmens (165) angeordnet ist, wobei die Kugelrolle (1657) oder die Lenkrolle dazu eingerichtet ist, bei einer Bewegung des Laderahmens (165) in die linke und rechte Richtung mit einem Boden in Kontakt zu kommen.

## Revendications

1. Robot de transport (100) comprenant:
un corps (130);
un moteur (170) relié à une partie inférieure du corps (130), le moteur (170) étant conçu pour déplacer le robot de transport;
une caisse de chargement (164) pouvant se rétracter dans le corps (130) et se déployer à partir de celui-ci,
un dispositif d'entraînement horizontal (161) conçu pour déplacer la caisse de chargement (164) vers l'avant et l'arrière par rapport au robot de transport;
un dispositif d'entraînement vertical (162) conçu pour déplacer la caisse de chargement (164) vers le haut; le robot de transport est **caractérisé par**:
la caisse de chargement (164) comprend une paire de structures de chargement (165) conçues pour se rapprocher et s'éloigner l'un de l'autre vers la gauche et la droite par rapport au robot de transport; et
un module de liaison (163) conçu pour écarter la paire de structures de chargement (165) de la caisse de chargement (164) vers la gauche et la droite afin d'ouvrir le fond de la caisse de chargement (164).

2. Robot de transport (100) selon la revendication 1, dans lequel chaque structure de chargement de la paire de structures de chargement (165) comprend:
un fond (1651);
une face avant (1652) couplée au module de liaison (163); et
un châssis de renfort (1653) reliant le fond (1651) à la face avant (1652), et
dans lequel les fonds (1651) de la paire de structures de chargement (165) sont conçus pour supporter un ou plusieurs articles.

3. Robot de transport (100) selon la revendication 2, dans lequel le corps (130) comprend:
une paire de châssis latéraux (132) situés sur les côtés gauche et droit de la caisse de chargement (164); et
une paire de châssis de support (136) situés sur les côtés gauche et droit de la caisse de chargement (164), chaque châssis de support de la paire de châssis de support comprenant une partie de fixation latérale (1362) fixée à un châssis latéral correspondant de la paire de châssis latéraux (132); et
une paire de supports de caisse de chargement (1361) faisant saillie des extrémités gauche et droite de la face arrière du corps (130), et
dans lequel la face avant (1652) de chaque châssis de chargement comprend une aile (1655) conçue pour entrer en contact avec un support de caisse de chargement correspondant de la paire de supports de caisse de chargement (1361) en réponse au déplacement vers l'arrière de la caisse de chargement (164).

4. Robot de transport (100) selon la revendication 3, dans lequel chaque partie de fixation latérale du cadre de support (136) est située en haut par rapport à une extrémité inférieure du support de caisse de chargement correspondant, et
dans lequel une extrémité supérieure de chaque aile (1655) est située en bas par rapport à la partie de fixation latérale et en haut par rapport à l'extrémité inférieure du support de caisse de chargement correspondant en réponse au déplacement de la caisse de chargement (164) vers le bas par le dispositif d'entraînement vertical.

5. Robot de transport (100) selon la revendication 3 ou la revendication 4, comprenant en outre un dispositif de retenue latéral (166) situé entre la paire de châssis de chargement, le dispositif de retenue latéral (166) étant conçu pour entraver le mouvement horizontal d'un ou plusieurs articles chargés dans la casse de chargement (164) de sorte que le ou les articles dans la boîte de chargement (164) ne se déplacent pas avec les structures de chargement (165) lorsque la casse de chargement (164) est ouverte, le dispositif de retenue latéral (166) comprenant:
une paire de parois latérales (1661) situées à gauche et à droite de la caisse de chargement; et
un support formant pont (1663) reliant la paire de parois latérales (1661) l'une à l'autre.

6. Robot de transport (100) selon la revendication 5, dans lequel chaque paroi latérale (1661) de la paire de parois latérales (1661) comprend:
un crochet (1665) situé dans une partie avant supérieure, le crochet (1665) étant accroché à une partie supérieure de la face avant d'un châssis de chargement correspondant de la paire de châssis de chargement; et
un rouleau de support (1664) situé dans sa partie inférieure, le rouleau de support (1664) étant en contact avec le fond (1651) de la structure de chargement correspondant (165).

7. Robot de transport (100) selon la revendication 5 ou la revendication 6, comprenant en outre:
une barre de guidage (1666) faisant saillie d'une face extérieure de chaque paroi latérale (1661), la barre de guidage (1666) partant à l'horizontale; et
une rainure de guidage (1366) en retrait d'une extrémité du support de caisse de chargement correspondant, la rainure de guidage (1366) étant conçue pour recevoir la barre de guidage (1666) de la paroi latérale correspondante (1661) de la paire de parois latérales (1661).

8. Robot de transport (100) selon l'une quelconque des revendications 5 à 7, comprenant en outre un roulement horizontal (1667) fixé à la surface extérieure de chaque paroi latérale (1661), le roulement horizontal (1667) étant conçu pour entrer en contact avec la caisse de chargement correspondante (164) lorsque la caisse de chargement (164) se déplace vers l'arrière.

9. Robot de transport (100) selon l'une quelconque des revendications 5 à 8, comprenant en outre un roulement vertical (1367) fixé à une surface avant de chaque support de caisse de chargement (1361), chaque roulement vertical (1367) étant en contact avec une paroi latérale correspondante (1661) de la paire de parois latérales (1661).

10. Robot de transport (100) selon l'une quelconque des revendications 1 à 9, dans lequel le dispositif d'entraînement vertical (162) comprend un support de mouvement vertical conçu pour se déplacer verticalement, et
dans lequel le module de liaison (163) comprend une paire de modules de liaison (163) couplés à la paire de châssis de chargement, chaque module de liaison (163) de la paire de modules de liaison (163) comprenant:
une première liaison (1631) comprenant une première extrémité couplée de manière pivotante à un cadre de chargement correspondant de la paire de structures de chargement (165) et une seconde extrémité couplée de manière pivotante au support de mouvement vertical du dispositif d'entraînement vertical; et
une roulette (1635) conçue pour entrer en contact avec la première liaison lorsque le support de mouvement vertical se déplace vers le bas,
dans lequel la première liaison est conçue pour déplacer le châssis de chargement correspondant à l'horizontale tandis qu'un angle de la première liaison par rapport au sol diminue après être entré en contact avec la roulette (1635).

11. Robot de transport (100) selon la revendication 10, dans lequel chaque module de liaison (163) comprend une deuxième liaison (1631) dont la première extrémité est couplée de manière pivotante au cadre de chargement correspondant et dont la deuxième extrémité est couplée de manière pivotante au support de mouvement vertical du dispositif d'entraînement vertical, et
dans lequel l'espacement entre les premières extrémités respectives des première et seconde liaisons est supérieur ou égal à l'espacement entre les secondes extrémités respectives des première et seconde liaisons.

12. Robot de transport (100) selon l'une quelconque des revendications 10 à 11, dans lequel le dispositif d'entraînement vertical (162) comprend en outre:
une vis à billes verticale (1622) s'étendant à la verticale, le support de mouvement vertical étant conçu pour se déplacer seul par rapport à la vis à billes verticale (1622); et
un guide linéaire vertical (1625) disposé parallèlement à la vis à billes verticale (1622), le guide linéaire vertical (1625) étant couplé au support de mouvement vertical.

13. Robot de transport (100) selon l'une quelconque des revendications 1 à 12, dans lequel le dispositif d'entraînement horizontal (161) comprend:
une vis à billes horizontale (1612) s'étendant à l'horizontale; et
un support de mouvement horizontal (1613) conçu pour se déplacer le long de la vis à billes horizontale (1612), le support de mouvement horizontal (1613) étant relié au dispositif d'entraînement vertical,
dans lequel le dispositif d'entraînement horizontal (161) comprend en outre un premier guide linéaire horizontal disposé parallèlement à la vis à billes horizontale (1612), le premier guide linéaire horizontal étant conçu pour guider le mouvement horizontal du support de mouvement horizontal (1613).

14. Robot de transport (100) selon la revendication 13, dans lequel le dispositif d'entraînement horizontal (161) comprend en outre un second guide linéaire horizontal disposé parallèlement à la vis à billes horizontale (1612), le second guide linéaire horizontal étant couplé à une extrémité supérieure du dispositif d'entraînement vertical (162) pour guider un mouvement horizontal du dispositif d'entraînement vertical.

15. Robot de transport (100) selon l'une quelconque des revendications 1 à 14, dans lequel chaque cadre de chargement (165) de la paire de structures de chargement (165) comprend un rouleau à billes (1657) ou une roulette située sur face inférieure (1651) de chaque structure de chargement (165), le rouleau à billes (1657) ou la roulette étant conçue(e) pour entrer en contact avec un sol en réponse au déplacement vers la gauche et la droite de la structure de chargement (165).
